# EUROPEAN PATENT APPLICATION

(11) **EP 4 563 753 A1**
(43) Date of publication of application: **04.06.2025**
(21) Application number: 23914768.9
(22) Date of filing: 19.12.2023
(51) Int. Cl.: E02F 9/00

(54) **CONSTRUCTION MACHINE**

(30) Priority: 05.01.2023 JP 2023000492
(71) Applicant: Hitachi Construction Machinery Co., Ltd., Tokyo 110-0015 (JP)
(72) Inventor: NAKATA, Akira, Tsuchiura-shi, Ibaraki 300-0013 (JP); OOTSUKA, Kakurou, Tsuchiura-shi, Ibaraki 300-0013 (JP); SUZUKI, Shouhei, Tsuchiura-shi, Ibaraki 300-0013 (JP)
(74) Representative: Manitz Finsterwald Patent- und Rechtsanwaltspartnerschaft mbB
(86) International application number: PCT/JP2023/045463
(87) International publication number: WO 2024/147281

(57) **Abstract**

An on-frame space portion (14) is formed on a revolving frame (5), the on-frame space portion (14) being surrounded on the front, back, left and right sides by a foot part (4A1) of a lower boom (4A) configuring part of a working mechanism (4), an engine (7) serving as a power source, a cab (9), and a cover member (10), a fuel tank (11) and an operating oil tank (12) serving as a right-side structure. An accumulator (15) and a relief valve (20) are arranged in the on-frame space portion (14). On top of that, the relief valve (20) is located in a position higher than a line connecting part (15A) of the accumulator (15).

## Description

### TECHNICAL FIELD

The present invention relates to construction machines such as a hydraulic excavator provided with an accumulator.

### BACKGROUND ART

A hydraulic excavator as a representative example of a construction machine is provided with an automotive lower traveling structure, an upper revolving structure mounted on the lower traveling structure to be capable of revolving thereto and a working mechanism provided on the front side of the upper revolving structure. The working mechanism includes a boom, an arm and a bucket. A foot part serving as a base end side of the boom is rotatably attached to the front side of a revolving frame.

The upper revolving structure is provided with revolving frame to the front side of which the foot part of the working mechanism is attached, an engine that is provided on the rear side of the revolving frame to drive a hydraulic pump, a powder source of an electric motor or the like, a cab that is positioned on the left side of the foot part to be provided on the revolving frame, and a right-side structure that is positioned on the right side of the foot part to be provided on the revolving frame. The right-side structure includes, for example, a fuel tank, an operating oil tank, a cover member that accommodates a control valve device, and the like.

In addition, there is shown as an example a hydraulic excavator provided with an accumulator that is connected to a hydraulic cylinder to store a pressure (energy) of a hydraulic pressure, a relief valve connected to the operating oil tank, and a connecting line that connects the accumulator and the relief valve (Patent Document 1).

### PRIOR ART DOCUMENT

### PATENT DOCUMENT

Patent Document 1: Japanese Patent Laid-Open No. 2016-188544 A

### SUMMARY OF THE INVENTION

Incidentally, many hydraulic equipment devices in addition to the above-mentioned equipment devices are installed on the upper revolving structure in the hydraulic excavator, and further, many hydraulic lines for connection of the hydraulic equipment devices are routed thereon. As a result, for example, in a case of post-fitting the accumulator and the relief valve to a vehicle body, it is required to install the accumulator and the relief valve in a position of avoiding the existing hydraulic equipment devices and hydraulic lines or detour the hydraulic lines to route them. Therefore, in a case of the hydraulic excavator according to Patent Document 1, it is difficult to facilitate the maintenance of the accumulator, the relief valve, the hydraulic line and the like or install them in a position for simple attachment, unfortunately inviting deterioration of the maintenance performance or a rise of the installation costs.

The present invention is made in view of the aforementioned problems in the conventional technology, and an object of the present invention is to provide a construction machine that can accomplish an improvement of maintenance performance and a reduction in installation costs by arranging an accumulator, a relief valve and a hydraulic line in an appropriate position.

An aspect of the present invention is provided with a construction machine comprising: an automotive lower traveling structure; an upper revolving structure mounted on the lower traveling structure to be capable of revolving thereto; and a working mechanism provided on the front side of the upper revolving structure to be driven by a hydraulic cylinder, wherein the upper revolving structure includes: a revolving frame to the front side of which a foot part of the working mechanism is attached; a power source that is provided on the rear side of the revolving frame to drive a hydraulic pump; a cab that is positioned on the left side of the foot part to be provided on the revolving frame; a right-side structure that is positioned on the right side of the foot part to be provided on the revolving frame and includes an operating oil tank that stores operating oil to be supplied to the hydraulic pump; an accumulator that is connected to a hydraulic cylinder; a relief valve that is connected to the operating oil tank; and a connecting line that connects a line connecting part of the accumulator and the relief valve, characterized in that an on-frame space portion is formed on the revolving frame so that front, back, left and right faces thereof are respectively surrounded by the foot part of the working mechanism, the power source, the cab and the right-side structure, the accumulator and the relief valve are arranged in the on-frame space portion, and the relief valve is located in a position higher than the line connecting part of the accumulator.

According to the aspect of the present invention, the accumulator, the relief valve and the hydraulic line can be arranged in an appropriate position, accomplishing an improvement of maintenance performance and a reduction in installation costs.

### BRIEF DESCRIPTION OF THE DRAWINGS

Fig. 1 is a left side view showing a wheel type hydraulic excavator applied to an embodiment of the present invention.
Fig. 2 is a perspective view showing a front section of an upper revolving structure in a state where a cab is omitted.
Fig. 3 is a cross section showing the upper revolving structure.
Fig. 4 is a perspective view showing the surroundings of an accumulator and a relief valve in an enlarging manner.
Fig. 5 is a plan view showing the surroundings of the accumulator and the relief valve in an enlarging manner.
Fig. 6 is a perspective view showing an attachment structure of the accumulator to a right vertical plate.

### MODE FOR CARRYING OUT THE INVENTION

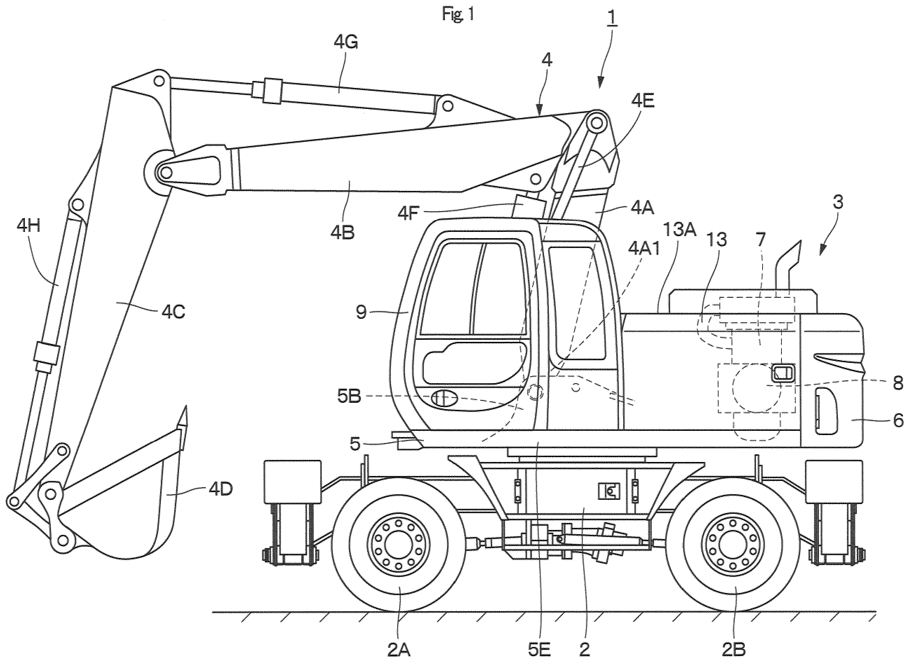

Hereinafter, a wheel type hydraulic excavator as a representative example of a construction machine according to an embodiment of the present invention will be explained in detail referring to Fig. 1 to Fig. 6. It should be noted that an explanation will be made of the present embodiment by using a front-back direction and a left-right direction as viewed from an operator sitting on an operator's seat in a cab.

In Fig. 1, a hydraulic excavator 1 is a wheel type hydraulic excavator provided with an automotive lower traveling structure 2 of a wheel type having left and right front wheels 2A and left and right rear wheels 2B (only the left side of each is shown). The hydraulic excavator 1 is provided with an upper revolving structure 3 mounted on the lower traveling structure 2 to be capable of revolving thereto and a working mechanism 4 provided on the front side of the upper revolving structure 3.

The working mechanism 4 is provided on the front side of the upper revolving structure 3. The working mechanism 4 includes a lower boom 4A a foot part 4A1 on the base end side of which is attached on the front side of a revolving frame 5 of the upper revolving structure 3 to be rotatable in an upper-lower direction, an upper boom 4B that is rotatably attached on the tip end side of the lower boom 4A, an arm 4C that is rotatably attached on the tip end side of the upper boom 4B, a bucket 4D that is rotatably attached on the tip end side of the arm 4C, a boom cylinder 4E, a positioning cylinder 4F, an arm cylinder 4G and a bucket cylinder 4H that respectively drive (rotate) the lower boom 4A, the upper boom 4B, the arm 4C and the bucket 4D.

It should be noted that the working mechanism 4 is provided with the bucket 4D attached as one kind of an attachment (working tool) but instead of the bucket 4D, may be provided with an attachment other than the bucket 4D of a grappler or the like. In addition, as to a boom of the working mechanism, a boom composed of one member bent in an L-letter shape may be used instead of the boom composed of two members of the lower boom 4A and the upper boom 4B.

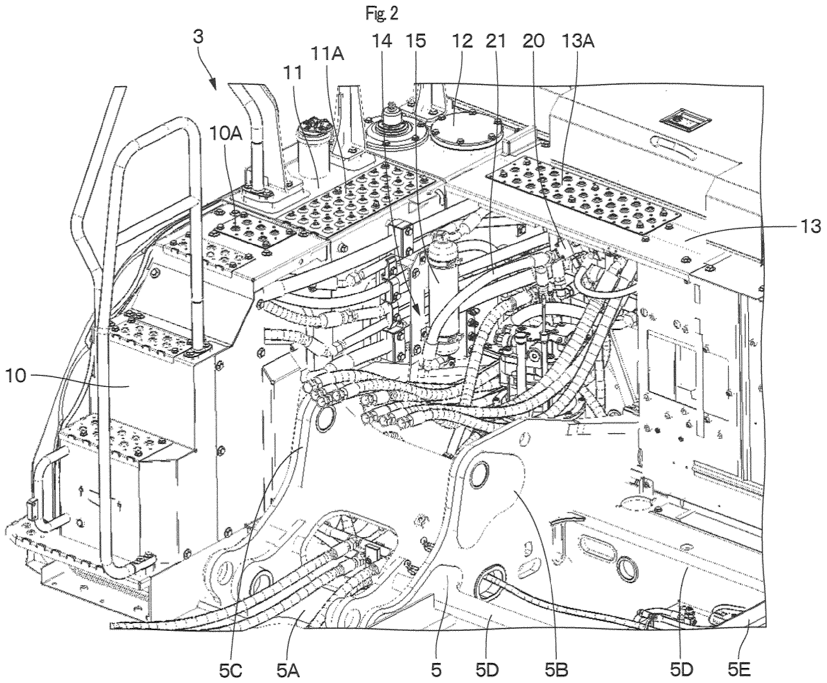

The revolving frame 5 is formed as a support structure that widens in the left-right direction and extends in the front-back direction. As shown in Fig. 2, the revolving frame 5 includes a thick bottom plate 5A extending in the front-back direction, a left vertical plate 5B and a right vertical plate 5C that rise upward on the bottom plate 5A and extend in the front-back direction with a certain interval therebetween in the left-right direction, a plurality of left extension beams 5D that extend to the left side from the bottom plate 5A and the left vertical plate 5B, a plurality of right extension beams (none of them is shown) that extend to the right side from the bottom plate 5A and the right vertical plate 5C, a left side frame 5E that is provided to extend in the front-back direction on tip ends of the plurality of left extension beams 5D, and a right side frame (not shown) that is provided to extend in the front-back direction on tip ends of the plurality of right extension beams. The foot part 4A1 of the lower boom 4A configuring part of the working mechanism 4 is rotatably attached to the front parts of the left vertical plate 5B and the right vertical plate 5C.

As shown in Fig. 1, a counterweight 6 is provided on the rear part of the revolving frame 5. The counterweight 6 is configured as a heavy load for acting as a weight balance to the working mechanism 4.

An engine 7 serving as a power source is provided on the rear side of the revolving frame 5 (in front of the counterweight 6). The engine 7 is located in a position in front of the counterweight 6 away to the rear side by a certain distance from the foot part 4A1 of the lower boom 4A. The engine 7 is configured as an internal combustion engine and extends in the left-right direction to be mounted in a transverse state. It should be noted that the power source may use, instead of the engine 7, an electric motor or a hybrid engine composed of a combination of an engine and an electric motor.

A hydraulic pump 8 is attached, for example, to the left side of the engine 7 (shown in a dotted line in Fig. 1). Because of this configuration, the hydraulic pump 8 is driven by the engine 7 to discharge the operating oil from an after-mentioned operating oil tank 12 as hydraulic oil.

A cab 9 is provided at the left front side on the revolving frame 5. The cab 9 is located on the left side of the foot part 4A1 in the lower boom 4A, specifically in the forefront between the left vertical plate 5B and the left side frame 5E of the revolving frame 5. The cab 9 defines therein an operator's room for an operator to get on. In addition, an operator's seat for an operator to sit on, a traveling steering wheel, a working control lever and the like (none of them is shown) are arranged inside the cab 9.

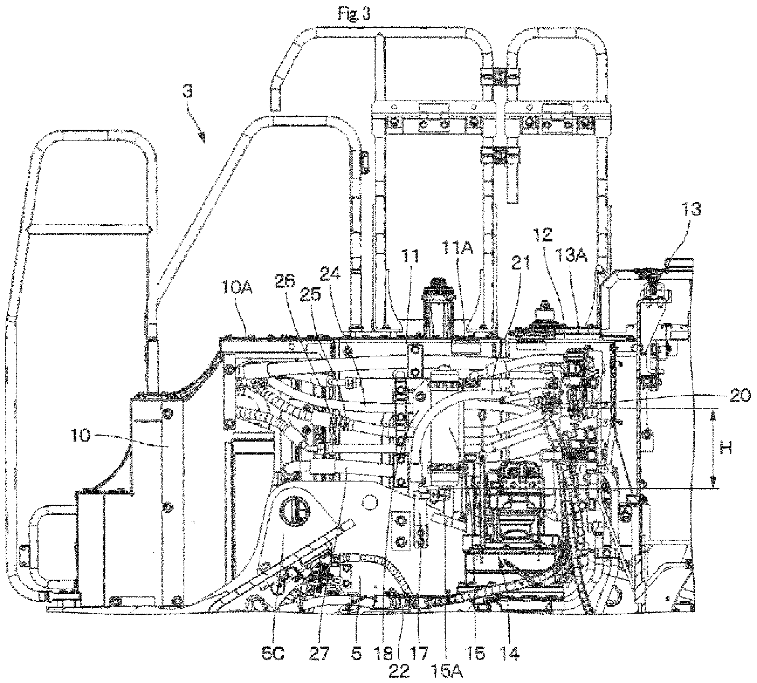

As shown in Fig. 2 and Fig. 3, a cover member 10 is provided at the right front side on the revolving frame 5. The cover member 10 has a hollow boxy structure, and a control valve device for supply/discharge of hydraulic oil to/from various hydraulic actuators, tools to be used in maintenance (none of them is shown) and the like are accommodated inside the cover member 10. In addition, the cover member 10 has a stepped top face 10A, and an operator can get on/off the upper revolving structure 3 by stepping on the stepped top face 10A.

A fuel tank 11 is positioned right after the cover member 10 to be provided at the right side on the revolving frame 5. The fuel tank 11 is formed as a rectangular container elongated in the upper-lower direction and stores therein fuel to be supplied to the engine 7. In addition, a top face 11A of the fuel tank 11 serves as footing where a worker steps at the time of performing a maintenance work or the like.

The operating oil tank 12 is positioned right after the fuel tank 11 to be provided at the right side on the revolving frame 5. The operating oil tank 12 is, as similar to the fuel tank 11, formed as a rectangular container elongated in the upper-lower direction and stores therein operating oil to be supplied to the hydraulic pump 8.

Here, the cover member 10, the fuel tank 11 and the operating oil tank 12 that are arranged closer to the front side than the engine 7 and closer to the right side than the right vertical plate 5C of the revolving frame 5 configure a right-side structure. It should be noted that in a case where an electric motor is used as a power source, the fuel tank 11 may be abolished to locate another structure, for example, a battery case that accommodates a battery for electric motor.

A rear cover 13 is provided between the counterweight 6 and the operating oil tank 12 to cover the engine 7, the hydraulic pump 8 and the like. A front section of a top face 13A in the rear cover 13 serves as footing that an operator steps at the time of performing the maintenance work or the like.

A on-frame space portion 14 is provided in the front section on the revolving frame 5. In detail, the on-frame space portion 14 is formed by a front wall as the foot part 4A1 of the lower boom 4A configuring part of the working mechanism 4, a rear wall as the engine 7, a left wall as a right face of the cab 9 and a right wall as a left face of the right-side structure composed of the cover member 10, the fuel tank 11 and the operating oil tank 12. Because of this configuration, the on-frame space portion 14 is formed as a rectangular space that extends in the front-back direction and the front, rear, left and right sides of which are surrounded. An accumulator 15, a relief valve 20 and a connecting line 21 which will be described later, and the like are arranged in the on-frame space portion 14.

The accumulator 15 is connected to, for example, the boom cylinder 4E serving as a hydraulic cylinder through the after-mentioned relief valve 20. The accumulator 15 is formed as a cylindrical container having pressure resisting performance and extends in the upper-lower direction to be located in a vertically mounted state. The accumulator 15 is positioned closer to the right side of the on-frame space portion 14 and is located in a position lower than the top face 11A of the fuel tank 11 configuring part of the right-side structure. In detail, the accumulator 15 is located closer to the left side than the right vertical plate 5C of the revolving frame 5 and between a position of an axis line at the time of rotatably attaching the foot part 4A1 of the lower boom 4A to the left vertical plate 5B and the right vertical plate 5C and the top face 11A of the fuel tank 11. Because of this configuration, the accumulator 15 does not interrupt a field of view when an operator inside the cab 9 look at the right side, making it possible to improve appearance of the upper revolving structure 3, so that when a worker moves on the top face 11A of the fuel tank 11 and on the top face 13A of the rear cover 13 serving as footing, the accumulator 15 does not interrupt the worker's movement.

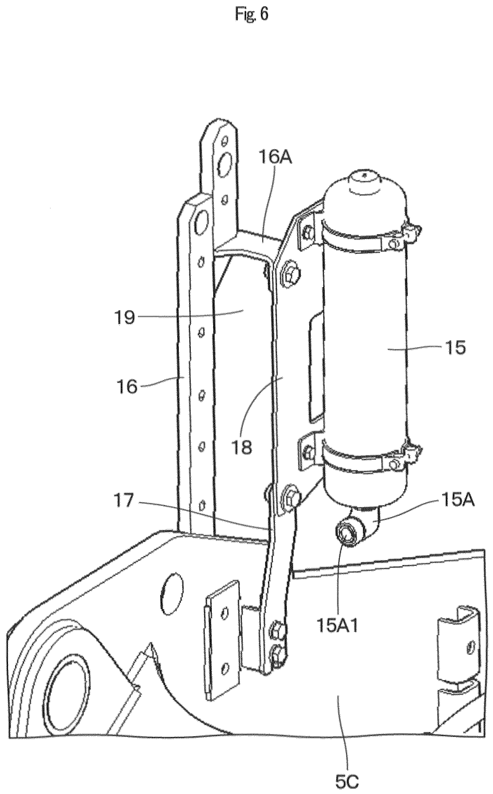

On the other hand, a line connecting part 15A is provided on the lower part of the accumulator 15. The line connecting part 15A is composed of a hose coupling called an elbow located so that an attachment direction to the bottom face of the accumulator 15 is at the right angle to a connecting port 15A1 for connection of the connecting line 21. As shown in Fig. 3 and Fig. 6, the connecting port 15A1 of the line connecting part 15A is attached to the opposite side to the relief valve 20, and according to the embodiment, is attached to be oriented to the front side.

The accumulator 15 causes the operating oil (hydraulic oil) discharged by the boom cylinder 4E to flow thereinto, thus making it possible to store a pressure (energy) of the hydraulic oil. On the other hand, the accumulator 15 controls a flow amount of the hydraulic oil to flow thereinto from the boom cylinder 4E at the traveling, making it possible to suppress a swing of the working mechanism 4 at the traveling to be small.

A bracket support member 16 is positioned in the vicinity of the rear side of the lower boom 4A and is attached to the right side face of the right vertical plate 5C. The bracket support member 16 is composed of an elongated thick plate extending upward from the right side face of the right vertical plate 5C. An upper support part 16A is provided on an upper part of the bracket support member 16 to project to the left side, an upper part of an accumulator attachment bracket 18 being attached to the upper support part 16A. In addition, a lower support portion 17 is provided on the left side face of the right vertical plate 5C right under the upper support part 16A to project upward, a lower part of the accumulator attachment bracket 18 being attached to the lower support portion 17.

The accumulator attachment bracket 18 is formed as a plate body facing the bracket support member 16 by a certain interval thereto in the left-right direction. The accumulator attachment bracket 18 has the upper part that is attached to the upper support part 16A and the lower part that is attached to the lower support portion 17. Further, the accumulator 15 is attached to the left side face of the accumulator attachment bracket 18 in a state of extending in the upper-lower direction (vertical direction).

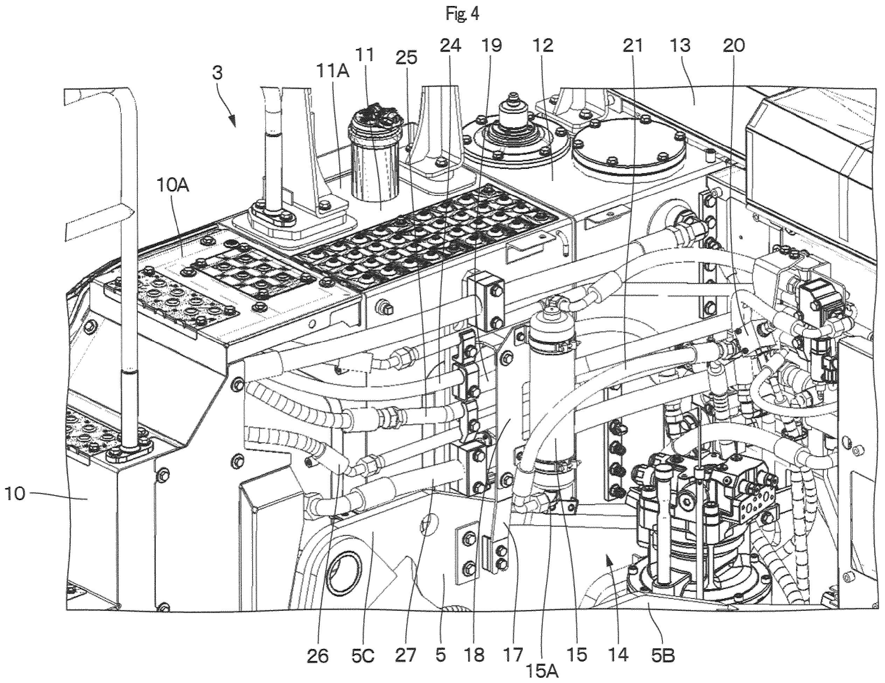

An insert space portion 19 is formed between the bracket support member 16 and the accumulator attachment bracket 18. As shown in Fig. 4, the insert space portion 19 is a space for inserting a plurality of hydraulic lines 24 to 27 which will be described later. Because of this, the plurality of hydraulic lines 24 to 27 can shortly and simply be routed without avoiding the accumulator 15 to detour.

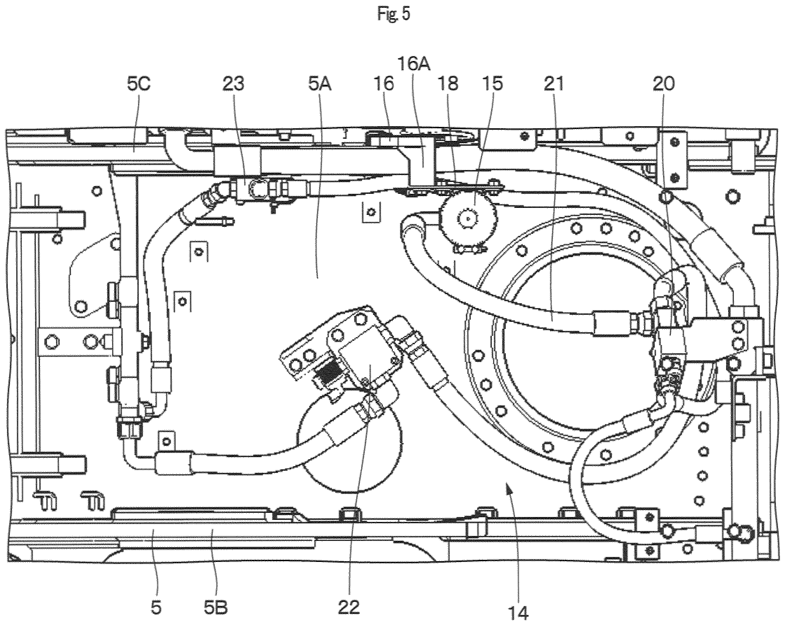

The relief valve 20 is located closer to the rear side of the on-frame space portion 14 and is connected to the operating oil tank 12. The relief valve 20 opens in a case where a pressure to be returned back from the boom cylinder 4E is higher than a preset pressure, and discharges the operating oil to the operating oil tank 12. As shown in Fig. 5, the relief valve 20 is located in a position shifted to the left side from the accumulator 15 in back of the accumulator 15.

On top of that, as shown in Fig. 3, the relief valve 20 is located in a position higher by a dimension H than the line connecting part 15A of the accumulator 15. Therefore, even when air is mixed into the hydraulic circuit at the time of installing the accumulator 15 or the like, this air can be discharged from the relief valve 20 in the position higher than the line connecting part 15A of the accumulator 15 to the operating oil tank 12 at the time of activating an after-mentioned ride control system. That is, an air vent work at the time of forming the ride control system can be omitted.

The connecting line 21 establishes connection between the line connecting part 15A of the accumulator 15 and the relief valve 20. The connecting line 21 is composed of a pressure tight hose that has the strength to be capable of withstanding a high pressure of the hydraulic oil and is bendable at the same time. The connecting line 21 has one end that is connected to the relief valve 20 and the other end that is connected to the connecting port 15A1 of the line connecting part 15A.

Here, since the pressure tight hose has a structure composed of a plurality of layers for withstanding the high pressure, a bending radius thereof becomes large. Therefore, a positional relation between the accumulator and the relief valve is limited to a position to be capable of being connected by the connecting line composed of the pressure tight hose in consideration of the bending radius of the connecting line. As a result, the accumulator and the relief valve cannot be arranged in a close position.

On the other hand, the connecting line 21 according to the present embodiment extends from the relief valve 20 toward the accumulator 15 and is connected to the connecting port 15A1 of the line connecting part 15A in a position to pass through the left side of the accumulator 15. Because of this configuration, a distance from the relief valve 20 to the connecting port 15A1 of the line connecting part 15A can be made large. In other words, the accumulator 15 and the relief valve 20 can be arranged in a close position without changing the bending radius of the connecting line 21.

An explanation will be made of the ride control system. The ride control system is a system that by actively operating the working mechanism 4 at the traveling, vibrations at the traveling are reduced to reduce collapse of cargo from the bucket 4D or alleviate fatigue of an operator. In the ride control system, the hydraulic circuit in the bottom side of the boom cylinder 4E supporting the working mechanism 4 is connected to the accumulator 15 and the hydraulic circuit in the rod side of the boom cylinder 4E is connected to the drain (operating oil tank 12). Accordingly the vibrations of the working mechanism 4 at the time the working mechanism 4 moves up and down by the ground unevenness can be mitigated by the accumulator 15.

The ride control system includes the accumulator 15, the relief valve 20, a bottom-side valve 22 connected to the bottom side of the boom cylinder 4E, a rod-side valve 23 connected to the rod side of the boom cylinder 4E (refer to Fig. 5), and the like.

It should be noted that the hydraulic lines 24 to 27 are connected to the control valve device inside the cover member 10. The hydraulic lines 24 to 27 are formed by metallic lines or pressure tight hoses. The hydraulic lines 24 to 27 extend in the front-back direction through the insert space portion 19 between the bracket support member 16 and the accumulator attachment bracket 18. When the hydraulic lines 24 to 27 are inserted into the insert space portion 19, it is not necessary to avoid the accumulator 15 to detour. Therefore, the hydraulic lines 24 to 27 can be formed shortly and can be routed in a simple fixing structure.

The hydraulic excavator 1 according to the present embodiment has the configuration as described above, and hereinafter, an explanation will be made of an operation of the hydraulic excavator 1.

An operator gets on the cab 9, sits on the operator's seat and starts with the engine 7. In this state, the operator operates the traveling steering wheel or the like, thereby making it possible to cause the lower traveling structure 2 to travel. In addition, the operator operates the working control lever or the like, thereby making it possible to perform the revolving operation of the upper revolving structure 3, the excavating work of earth and sand and the like using the working mechanism 4.

Here, in a case of traveling in a state where earth and sand are excavated by the bucket 4D of the working mechanism 4, the ride control system is configured to operate. The ride control system is configured so that when the lower boom 4A of the working mechanism 4 moves up and down by the ground unevenness, the vibrations of the working mechanism 4 can be mitigated by discharge/supply of the hydraulic oil between the boom cylinder 4E and the accumulator 15.

In this way, according to the present embodiment, the on-frame space portion 14 is formed on the revolving frame 5, the on-frame space portion 14 being surrounded on the front, back, left and right sides by the foot part 4A1 of the lower boom 4A configuring part of the working mechanism 4, the engine 7 serving as the power source, the cab 9, and the cover member 10, the fuel tank 11 and the operating oil tank 12 serving as the right-side structure. The accumulator 15 and the relief valve 20 are arranged in the on-frame space portion 14. On top of that, the relief valve 20 is located in a position higher than the line connecting part 15A of the accumulator 15.

Accordingly the accumulator 15 and the relief valve 20 can be arranged in an appropriate position in order that the relief valve 20 can be in the position higher than the line connecting part 15A of the accumulator 15. Therefore, even when air is mixed into the hydraulic circuit at the time of installing the accumulator 15 or the like, this air can be discharged from the relief valve 20 in the position higher than the line connecting part 15A of the accumulator 15 to the operating oil tank 12 at the time of activating the ride control system. As a result, the air vent work at the time of forming the ride control system can be omitted to accomplish the improvement of the maintenance performance and the reduction in the installation costs.

In addition, in the line connecting part 15A of the accumulator 15 the connecting port 15A1 is located toward the front side as the opposite side to the relief valve 20, and the connecting line 21 extends to the front side from the relief valve 20 toward the accumulator 15 and is connected to the connecting port 15A1 in a position to pass through the side of the accumulator 15.

Accordingly even in a case of connecting the accumulator 15 and the relief valve 20 by the connecting line 21 composed of the pressure tight hose the bending radius of which cannot be made small, the accumulator 15 and the relief valve 20 are arranged in the close position, while an interval of the connecting positions by the connecting line 21 can be made large. Because of this configuration, the accumulator 15 and the relief valve 20 can be arranged in the close position without changing the bending radius of the connecting line 21. As a result, the accumulator 15 and the relief valve 20 can be installed in the position to be capable of easily performing the maintenance and in the position to be simply attached, making it possible to accomplish the improvement of the maintenance performance and the reduction in the installation costs.

Further, the revolving frame 5 is provided with the left vertical plate 5B and the right vertical plate 5C that are provided to rise upward and extend in the front-back direction with an interval in the left-right direction. The foot part 4A1 of the lower boom 4A configuring part of the working mechanism 4 is attached to the left vertical plate 5B and the right vertical plate 5C. The bracket support member 16 extending upward and the accumulator attachment bracket 18 that is attached to the bracket support member 16 and to which the accumulator 15 is attached are provided on the right vertical plate 5C. The insert space portion 19 for insert of the hydraulic lines 24 to 27 is formed between the bracket support member 16 and the accumulator attachment bracket 18. Because of this configuration, when the plurality of hydraulic lines 24 to 27 are inserted into the insert space portion 19, it is not necessary to avoid the accumulator 15 to detour. Therefore, the hydraulic lines 24 to 27 can be formed shortly and can be routed in a simple fixing structure. In this respect as well, it is possible to accomplish the improvement of the maintenance performance and the reduction in the installation costs.

It should be noted that the embodiment is explained by taking the wheel type hydraulic excavator 1 as the construction machine as an example. However, the present invention is not limited thereto but may be applied widely to other construction machines such as a crawler type hydraulic excavator or the like.

### DESCRIPTION OF REFERENCE NUMERALS

1: HYDRAULIC EXCAVATOR (CONSTRUCTION MACHINE)
2: LOWER TRAVELING STRUCTURE
3: UPPER REVOLVING STRUCTURE
4: WORKING MECHANISM
4A: LOWER BOOM (BOOM)
4A1: FOOT PART
4E: BOOM CYLINDER (HYDRAULIC CYLINDER)
5: REVOLVING FRAME
5A: BOTTOM PLATE
5B: LEFT VERTICAL PLATE
5C: RIGHT VERTICAL PLATE
7: ENGINE (POWER SOURCE)
8: HYDRAULIC PUMP
9: CAB
10: COVER MEMBER (RIGHT-SIDE STRUCTURE)
11: FUEL TANK (RIGHT-SIDE STRUCTURE)
12: OPERATING OIL TANK (RIGHT-SIDE STRUCTURE)
14: ON-FRAME SPACE PORTION
15: ACCUMULATOR
15A: LINE CONNECTING PART
15A1: CONNECTING PORT
16: BRACKET SUPPORT MEMBER
18: ACCUMULATOR ATTACHMENT BRACKET
19: INSERT SPACE PORTION
20: RELIEF VALVE
21: CONNECTING LINE
24 TO 27: HYDRAULIC LINE

## Claims

1. A construction machine comprising:
an automotive lower traveling structure;
an upper revolving structure mounted on the lower traveling structure to be capable of revolving thereto; and
a working mechanism provided on the front side of the upper revolving structure to be driven by a hydraulic cylinder,
wherein the upper revolving structure includes:
a revolving frame to the front side of which a foot part of the working mechanism is attached;
a power source that is provided on the rear side of the revolving frame to drive a hydraulic pump;
a cab that is positioned on the left side of the foot part to be provided on the revolving frame;
a right-side structure that is positioned on the right side of the foot part to be provided on the revolving frame and includes an operating oil tank that stores operating oil to be supplied to the hydraulic pump;
an accumulator that is connected to the hydraulic cylinder;
a relief valve that is connected to the operating oil tank; and
a connecting line that connects a line connecting part of the accumulator and the relief valve, **characterized in that**:
an on-frame space portion is formed on the revolving frame, the on-frame space portion being surrounded on the front, back, right and left sides by the foot part of the working mechanism, the power source, the cab and the right-side structure;
the accumulator and the relief valve are arranged in the on-frame space portion; and
the relief valve is located in a position higher than the line connecting part of the accumulator.

2. The construction machine according to claim 1, wherein
the line connecting part of the accumulator is provided with a connecting port that is located toward the opposite side to the relief valve, wherein
the connecting line extends from the relief valve toward the accumulator and is connected to the connecting port in a position to pass through the side of the accumulator.

3. The construction machine according to claim 1, wherein
the revolving frame is provided with a left vertical plate and a right vertical plate that rise upward to extend in the front-back direction with an interval in the left-right direction, the foot part of the working mechanism being attached to the left vertical plate and the right vertical plate,
the right vertical plate is provided with a bracket support member and an accumulator attachment bracket, the bracket support member extending upward, the accumulator attachment bracket being attached to the bracket support member, and the accumulator being attached to the accumulator attachment bracket, and
an insert space portion for insert of a hydraulic line is formed between the bracket support member and the accumulator attachment bracket.

4. The construction machine according to claim 1, wherein
the working mechanism includes a boom provided with the foot part,
the hydraulic cylinder includes a boom cylinder for driving the boom, and
the accumulator is connected to the boom cylinder.
